(19) Europäisches Patentamt
European Patent Office
Office européen des brevets

(11) **EP 4 468 550 A1**

(12) **EUROPEAN PATENT APPLICATION**
published in accordance with Art. 153(4) EPC

(43) Date of publication:
**27.11.2024 Bulletin 2024/48**

(21) Application number: **22922117.1**

(22) Date of filing: **12.12.2022**

(51) International Patent Classification (IPC):
**H02J 3/46** (2006.01)    **G06Q 50/06** (2024.01)
**H02J 3/38** (2006.01)    **H02J 13/00** (2006.01)

(52) Cooperative Patent Classification (CPC):
**G06Q 50/06; H02J 3/38; H02J 3/46; H02J 13/00**

(86) International application number:
**PCT/JP2022/045677**

(87) International publication number:
**WO 2023/139966 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.01.2022 JP 2022008232**

(71) Applicant: **Hitachi, Ltd.**
**Tokyo 100-8280 (JP)**

(72) Inventors:
• **SHIMADA, Atsushi**
  **Tokyo 100-8280 (JP)**
• **KUMANO, Kengo**
  **Tokyo 100-8280 (JP)**
• **TAKAHASHI, Akeshi**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **POWER GENERATION MODULE MANAGEMENT DEVICE**

(57)    This power generation module management device is used by a power consumer and manages the configuration of a power generation source including at least one power generation module in accordance with the amount of power requested by the power consumer. The power generation module has an engine that produces power by burning fuel. The power generation module management device has a storage unit that stores power demand information related to the amount of power requested by the power consumer, and a procurable power generation module list in which procurable power generation modules are recorded, and selects a power generation module capable of outputting the amount of power requested by the power consumer, from the procurable power generation module list, on the basis of the power demand information and the type of fuel available to the power consumer.

FIG. 1

EP 4 468 550 A1

## Description

Technical Field

The present invention relates to a technology for managing a power generation module having an engine.

Background Art

In order to achieve RE (Renewable Energy) 100, which is an international initiative that has been proposed in recent years and that aims to cover 100% of the power consumption of the business operations of a company with renewable energy (hereinafter referred to as "renewable energy"), large-scale introduction of fluctuating renewable energy requires an adjustable power generation system using fuel derived from renewable energy such as hydrogen (hereinafter, RE fuel). Large-scale gas-fired power generation is one option, but the facility investment recovery period is then long.

In addition, in a case where the output at the time of rated operation of an existing large-scale thermal power generation facility is set at 100%, the range for handling power generation output fluctuations when using the facility is an operation range of 30 to 100%, and thus compatibility with fluctuating renewable energy is low. Further, because the facility installation site is fixed, an examination in combination with power line reinforcement are required, and thus additional asset costs are incurred. Furthermore, because the fuel range to be used in large-scale thermal power generation is limited, it is difficult to flexibly handle existing fuels and RE fuels available in the region. Therefore, in order to shorten the facility investment recovery period, a power generation system capable of handling varying RE fuel through slight improvement of existing assets is required.

In other words, the provision of an asset service is required that implements flexible power generation utilizing regional RE fuel by adapting existing mass-produced engines such as automobile engines and industrial engines to renewable energy-derived fuels and by using a low-cost engine generator capable of handling fluctuations that combines a plurality of such engines.

Citation List

Patent Literature

PTL 1: JP 2018-206302 A

Summary of Invention

Technical Problem

When an automobile or industrial engine is used as a stationary power generation system compatible with RE fuel, the method for using the engine (operating points and operating time) and the method for handling the RE fuel are different, and hence there is a problem of an increase in operating costs due to adaptation at the time of failure or the maintenance cycle being shortened. Therefore, it is important to construct an operation using an appropriate combination of engine types and a replacement method at the time of failure.

PTL 1 discloses an invention related to a power generation system for which a vehicle engine is repurposed as a stationary engine generator and which combines a plurality of such engine generators. Specifically, an invention is disclosed in which an engine-type power generation device includes a plurality of vehicle engine generators, a fuel supply unit, an operation controller, and a state measuring instrument that measures operation state data of each engine, and in which a management system includes a database unit that stores device information relating to a user and an installation site of the engine-type power generation device, operation state data, and engine information including a specification or a model of the vehicle engine, a data reception unit that receives the operation state data from the engine-type power generation device via a data communication line and stores the operation state data in the database unit, and a replacement-required engine detection unit that, on the basis of the operation state data, detects and specifies that the vehicle engine in a failed state or the like is included in the engine-type power generation device.

PTL 1 discloses failure diagnosis after introducing an engine-type power generation device, but does not disclose an examination of the type of power generation device at the time of the introduction. In addition, there are no disclosures relating to the fuel type to be used in handling the RE fuel. For this reason, it is difficult to handle the risk of failure after introducing stationary power generation corresponding to RE fuel and the shortening of the lead times for maintenance and servicing.

Solution to Problem

In order to solve the above problems, a power generation module management device according to the present invention is a power generation module management device that is used by a power consumer and that manages, according to an amount of power requested by the power consumer, a configuration of power generation sources including at least one power generation module, the device including: a storage unit that records power demand information relating to the amount of power requested by the power consumer and a procurable power generation module list in which procurable power generation modules are recorded, wherein the device selects the power generation module capable of outputting the amount of power requested by the power consumer, from the procurable power generation module list, on a basis of the power demand information and a type of fuel available to the power consumer.

Advantageous Effects of Invention

In the present invention, it is possible to reduce risk of failure, improve ease of servicing and maintenance, and shorten a lead time by selecting an engine generator that can be provided for an energy demand situation of a power consumer and the type of RE fuel that can be used, and by selecting an engine generator according to a state of health of the engine generator. In addition, because the optimal number of devices and the optimal type of devices can be selected according to the energy consumption of the power consumer and the available fuel type, the optimal power can be supplied to the power consumer, and the effective use of the energy resources and the reduction of $CO_2$ can be implemented at low cost.

Additional features relating to the present invention will become apparent from the description of the present specification and the accompanying drawings. Problems, configurations, advantageous effects, and the like other than those described above will be clarified by the descriptions of the embodiments hereinbelow.

Brief Description of Drawings

[FIG. 1] FIG. 1 is a block diagram illustrating a relationship between a power generation module management device and a power consumer according to an embodiment of the present invention.
[FIG. 2] FIG. 2 is a diagram showing an example of a system configuration in which a diesel engine-based RE handling device is installed.
[FIG. 3] FIG. 3 is a diagram showing an example of a system configuration in which a spark-ignition engine-based RE handling device is installed.
[FIG. 4] FIG. 4 is a diagram showing an example of a configuration of a fuel supply device of an RE handling device.
[FIG. 5] FIG. 5 is a block diagram illustrating a functional configuration of an RE handling device.
[FIG. 6] FIG. 6 is an example of a graph to illustrate processing performed by a health evaluation unit.
[FIG. 7] FIG. 7 is another example of a graph to illustrate processing performed by a health evaluation unit.
[FIG. 8] FIG. 8 is a flowchart showing processing performed at the time of planning introduction of a power generation module to a customer using the power generation module management device.
[FIG. 9] FIG. 9 is a table showing an example of a procurable power generation module list.
[FIG. 10] FIG. 10 is a table showing a power generation module configuration at an initial stage of introducing power generation modules.
[FIG. 11] FIG. 11 is a table showing a power generation module configuration in a middle stage of introducing power generation modules.
[FIG. 12] FIG. 12 is a table showing a power generation module configuration in a final stage of introducing power generation modules.
[FIG. 13] FIG. 13 is a graph showing an example of a cost calculated at the time of introducing the power generation modules.
[FIG. 14] FIG. 14 is a graph showing an example of a $CO_2$ discharge amount calculated at the time of introducing the power generation modules.
[FIG. 15] FIG. 15 is a flowchart showing an operation method performed by the power generation module management device after introducing the power generation modules.
[FIG. 16] FIG. 16 is a table showing a situation in which a power generation module configuration is changed during operation.

Description of Embodiments

Hereinafter, an embodiment will be described with reference to the drawings.

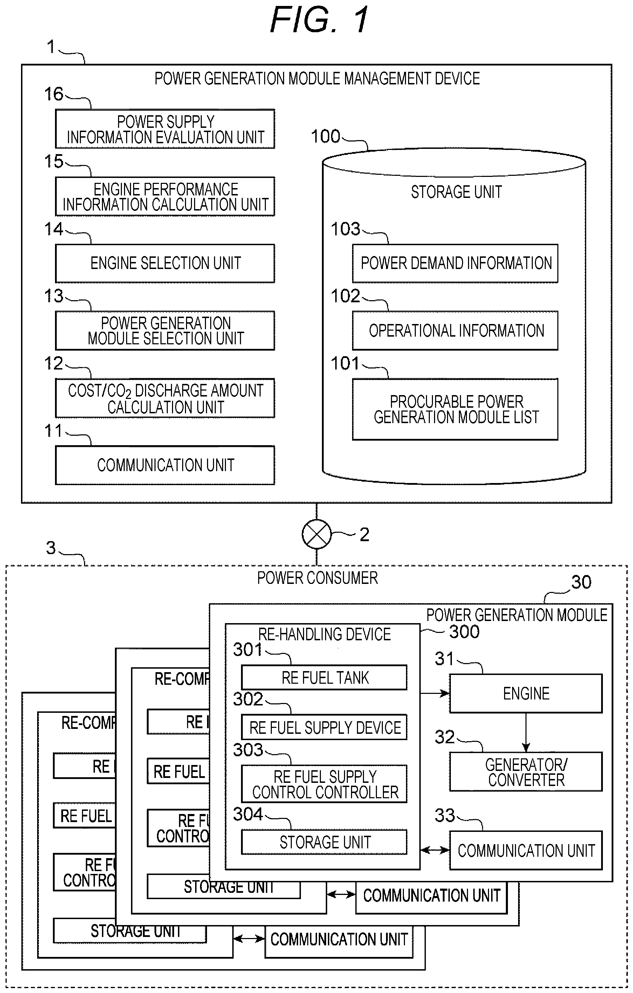

FIG. 1 is a block diagram to illustrate a relationship between a power generation module management device 1 and a power consumer according to an embodiment of the present invention.
The power generation module management device 1 includes a storage unit 100, determines the required configuration of a power generation module on the basis of, for example, power demand information 103 and operational information 102 related to an amount of power required by a power consumer such as a factory, and selects power generation modules by referring to the procurable power generation module list 101.
The power generation module management device 1 includes a power supply information evaluation unit 16, an engine performance information calculation unit 15, an engine selection unit 14, a power generation module selection unit 13, a cost/$CO_2$ discharge amount calculation unit 12, and a communication unit 11. The power generation module management device 1 further includes the storage unit 100. The storage unit 100 stores power demand information 103 of a power consumer, operational information 102, and a procurable power generation module list 101. The power generation module management device 1 selects and determines, on the basis of the power demand information 103, a configuration of power generation modules to be provided to the power consumer from the procurable power generation module list 101. The configuration of power generation modules involves rated outputs of the power generation modules, available fuel types, the required numbers of power generation modules, and the like. The module configuration can be changed on the basis of the operational information 102 from the module configuration determined at the time of introduction. Because the power generation modules of the present embodiment are small modules, same can be easily replaced, and hence it is possible to provide an optimal power generation module configuration on the basis of the actual power demand of the power consumer. The power consumer is thus able to reduce $CO_2$ at low cost. Although power demand is described as an example of energy demand in the present embodiment, energy demand including heat demand is also included. In addition, the operational information is information on what kind of device or energy source a customer uses in operations, information on the energy use applications, and so forth.

The power generation module management device may be, for example, hardware such as a PC that includes a CPU and a memory, or may be configured to be installed in the cloud as software.

Hereinafter, each functional unit included in the power generation module management device 1 will be described. The power supply information evaluation unit 16 acquires the power demand information received from the power consumer and generates information on the power supply capacity required to satisfy the power demand. Because the required power supply information changes depending on the day-to-day weather and the operation status of the customer, the power demand information includes information regarding short-term and long-term change ranges, change times, maximum supplied power, minimum supplied power, and the like. Short term refers to changes in units of seconds, and long term refers to changes in units of months.

The engine performance information calculation unit 15 calculates requested engine performance information, which is required engine performance information, from the power supply information, and calculates the requested engine performance and the number of engines which are required to constitute the power generation module.

The engine selection unit 14 collects performance information of distributed engines, and selects an engine on the basis of the requested engine performance information. A criterion for selecting an engine is, for example, an engine model and health (E-SOH (Engine-State Of Health)). Here, E-SOH (hereinafter referred to as $E_s$) is an index representing the health of the power generation module, and is calculated on the basis of the health and the deterioration state of the engine incorporated in the power generation module. Specifically, the health can be evaluated using any one or more of the timing of the combustion centroid and the combustion stability index. Es at the time of engine procurement is evaluated and acquired under operating conditions such as rotation speed and torque when an engine is incorporated as a power generation module. A plurality of types of engines having different discharge amounts and combustion types may be selected in combination as engines installed in the power generation module.

The power generation module selection unit 13 selects a power generation module in which an engine selected by the engine selection unit 14 is to be installed, from the procurable power generation module list 101. In a case where there is no corresponding power generation module in the list, such a power generation module may be newly manufactured, or the engine selection unit 14 may perform the engine selection again.

The cost/$CO_2$ discharge amount calculation unit 12 calculates a cost to be charged to the power consumer when the selected power generation module is provided to the power consumer, and a prediction of changes in the $CO_2$ discharge amount due to the operation of the power generation module. As an engine to be incorporated in the power generation module, it is possible to utilize a used vehicle or a used industrial engine, or a brand-new distributed automobile engine or a brand-new distributed industrial engine, and of which the performance, price, and the like are known. When the cost is calculated, the current price of the engine is calculated based on the E-SOH, and the price of the power generation module is determined. When a plurality of power generation modules are combined, a total price of the power generation modules is calculated. In addition, the fuel cost and the maintenance cost at the time of the operation are calculated. As a result, it is possible to calculate the operating expense (OPEX: running cost incurred to run a business) and capital expenditure (CAPEX: investment cost and capital investment, etc.) during the introduction period of the power generation module to be introduced to the power consumer and present the introduction cost (sales price and lease price) to the customer.

The communication unit 11 of the power generation module management device 1 is connected to the communication unit 33 of the power consumer 3 via the network 2, and transmits and receives information such as the power demand information 103 and the operational information 102.

The power generation module 30 of the power consumer 3 includes an engine 31, a generator/converter 32, and a communication unit 33 for communicating with the power generation module management device 1. As the engine 31, a used or brand-new vehicle engine or a used or brand-new industrial engine is used. An RE handling device 300 is incorporated in the power generation module 30 so that the engine can use the RE fuel. The engine 31 can also use fuel other than renewable energy. It is also possible to supply a plurality of such fuels simultaneously.

As the engine 31, a diesel engine, a spark-ignition engine, or an HCCI engine (HCCI: Homogeneous-Charge Compression Ignition) can be selected, the selection being made according to the type of available RE fuel. Furthermore, each engine can evaluate the health ($E_s$) of the power generation module via the RE handling device, and can evaluate the durability of the engine, the maintenance lead time, and the like. The health of the generator may also be included in the evaluation. $E_s$ will be described below. A plurality of the power generation modules 30 can be combined, and power generated by a generator is merged by direct current or alternating current and supplied to the power consumer.

The RE handling device 300 installed in the power generation module 30 is a device for generating power by means of the power generation module using the RE fuel. The RE handling device 300 includes an RE fuel tank 301, an RE fuel supply device 302, an RE fuel supply control controller 303, and a storage unit 304. The RE handling device 300 is connected to the engine 31 by a pipe, and RE fuel is supplied to the engine 31. In addition, data is bidirectionally transmitted between the RE handling device 300 and the engine 31. Further, the RE handling device 300 is connected to the communication unit 33 via a signal line, and can transmit data bidirectionally.

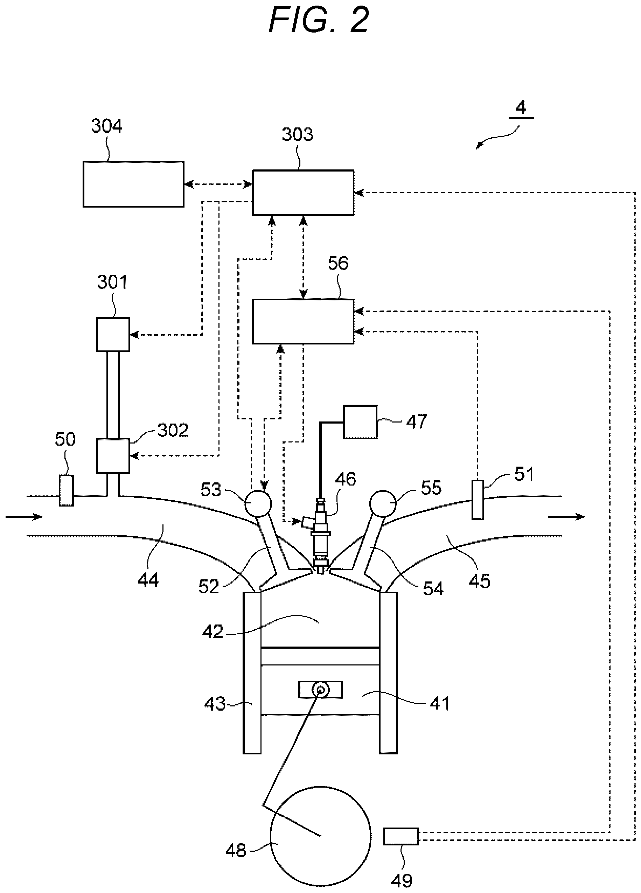

FIG. 2 is a configuration of a system 4 in which a diesel engine-based RE handling device is installed. The RE fuel is, for example, hydrogen, biogas, ethanol, methanol, ammonia, or the like. In the present embodiment, the RE fuel supply device 302 and the RE fuel tank 301 are connected to an intake pipe 44 of an engine combustion chamber 42. The RE fuel supply control controller 303 is connected to the RE fuel tank 301 and the RE fuel supply device 302, a control signal is outputted from the RE fuel supply control controller 303 to the RE fuel tank 301 and the RE fuel supply device 302, and the supply amount and the supply timing of the RE fuel to be supplied to the engine are controlled. A supply amount of RE fuel supplied to the engine is controlled on the basis of a combustion state of the engine and engine operating conditions (rotation speed, torque). The supply amount of RE fuel supplied to the engine may be controlled while the air-fuel ratio is monitored by an airflow sensor 50 and an oxygen concentration sensor 51. The air and the RE fuel are mixed in the intake pipe 44 and supplied to the engine combustion chamber 42. The supplied air and the RE fuel are increased in temperature and pressure by compression of the piston 41. Thereafter, diesel fuel is supplied from a fuel tank 47 to the engine combustion chamber 42 by an injector 46, combustion is started by ignition of the diesel fuel, and the RE fuel is burned.

A rotation signal of a rotation sensor 49 of a crankshaft 48 is taken in by the RE fuel supply control controller 303 to calculate the health $E_s$. In addition, a signal of a rotation sensor 53 of the cam shaft is taken into the RE fuel supply control controller 303, and an engine cylinder determination is performed, and thus the $E_s$ of each engine cylinder in the power generation module can be calculated separately. Furthermore, a signal outputted to the RE fuel supply device 302 is controlled on the basis of $E_s$, and the supply amount of the RE fuel to be supplied to the engine combustion chamber 42 is controlled, whereby highly efficient combustion can be performed.

The injector 46 may control the injection amount and the injection timing of the diesel fuel on the basis of the health $E_s$. In addition, the EGR rate, the turbo pressure, the engine speed, and the torque may be controlled. As the diesel fuel, light oil, heavy oil, biodiesel fuel, synthetic fuel, and the like can be used. The synthetic fuel is a hydrocarbon-based fuel synthesized from $CO_2$ and hydrogen, and is, for example, one of the polyoxymethylene dimethyl ethers.

In the present embodiment, configurations corresponding to the RE handling device are the RE fuel supply control controller 303, the RE fuel tank 301, the RE fuel supply device 302, and the storage unit 304; reference signs 52 and 54 denote an intake valve and a discharge valve, respectively; reference sign 56 denotes various ECUs installed in the vehicle; and the storage unit 304 has a function for storing a value calculated by the RE fuel supply control controller 303.

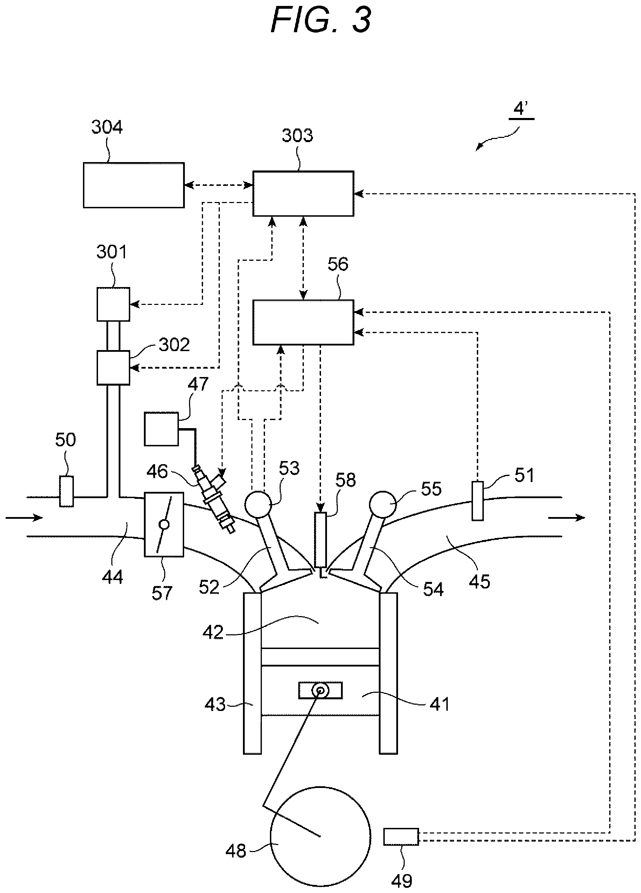

FIG. 3 is a diagram showing a configuration of a system 4' in which a spark-ignition engine-based RE handling device is installed. The same configurations as in FIG. 2 are assigned the same reference signs, and descriptions thereof will be omitted.

FIG. 3 illustrates a configuration in a case where a plurality of fuels are each supplied to the engine combustion chamber 42 by different systems. The RE fuel supply device 302 and the RE fuel tank 301 are connected to the intake pipe 44 of the engine combustion chamber 42, and a flow rate of a mixed gas of air and RE fuel is controlled by a throttle 57. The spark ignition fuel is supplied by the injector 46. The spark ignition fuel is gasoline, LPG, natural gas, ethanol-mixed gasoline, ethanol, or the like. In a case where the RE fuel and the spark ignition fuel are one type or a mixed fuel, the configuration may be any one of the injector 46 and the RE fuel supply device 302. An air-fuel mixture of the supplied fuel and air is supplied to the engine combustion chamber 42, and after piston compression, combustion is started by ignition of an ignition device 58.

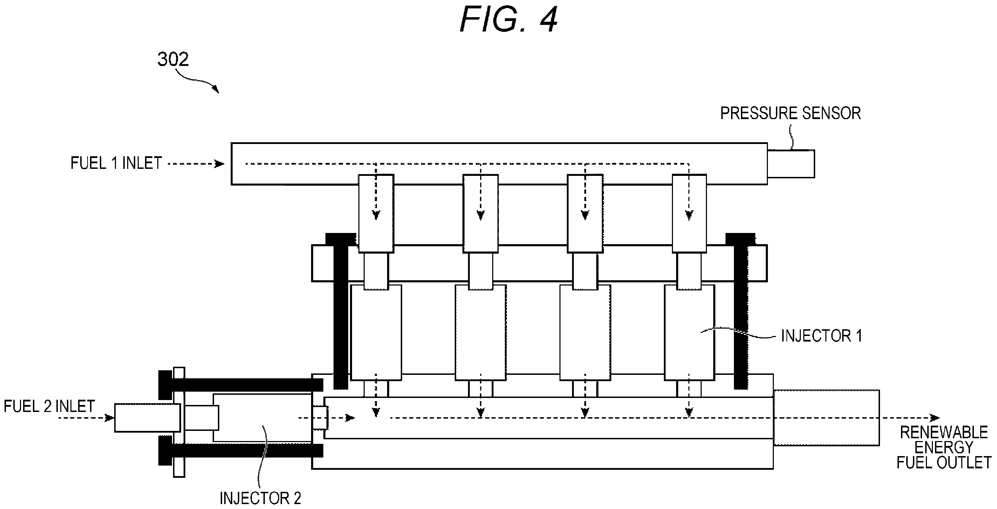

FIG. 4 is an example of a configuration of the RE fuel supply device 302. As illustrated in FIG. 4, the RE fuel supply device 302 is capable of adjusting and mixing the supply amounts of a plurality of fuels. For example, an injection amount of each of the fuels 1 and 2 is controlled by an injector, and the two injected fuels are mixed and supplied to an intake pipe of the engine. Instead of the fuels 1 and 2, one type of fuel and one type of inert medium may be supplied. Examples of the inert medium include EGR gas, water, and water vapor. By mixing the inert medium with the RE fuel and supplying the mixture to the engine, it is possible to control the combustion timing and the combustion stability, which leads to an increase in the supply width of the RE fuel. In addition, the RE fuel supply device 302 may use only one injector and may be used for controlling the supply amount of one type of fuel.

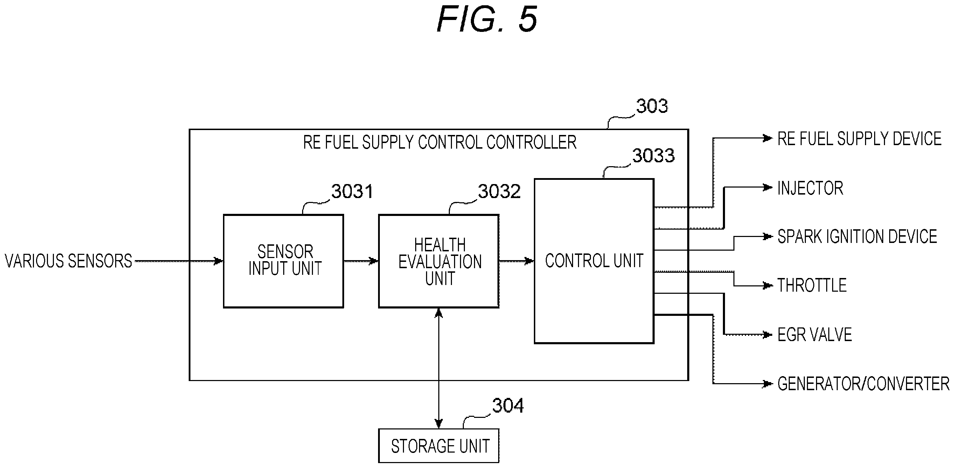

FIG. 5 is a block diagram illustrating a functional configuration of the RE fuel supply control controller 303. As illustrated in FIG. 5, input values from various sensors are acquired from a sensor input unit 3031. The sensors here include a crankshaft rotation sensor, a camshaft rotation sensor, the airflow sensor 50, the oxygen concentration sensor 51, a current sensor of the generator/-converter 32, an engine cylinder pressure sensor, and the like. The input value acquired by the sensor input unit 3031 is transmitted to a health evaluation unit 3032, and the health $E_s$ is calculated using an equation described below. The calculated $E_s$ is further transmitted to a control unit 3033, and the RE fuel supply device 302, the injector 46, the ignition device 58, the throttle 57, the EGR valve (not illustrated in FIGS. 2 and 3), and the generator/converter are controlled on the basis of the health $E_s$. In the generator/converter, power generation operating points (power, voltage, current) are controlled. The health evaluation unit 3032 communicates data with the storage unit 304.

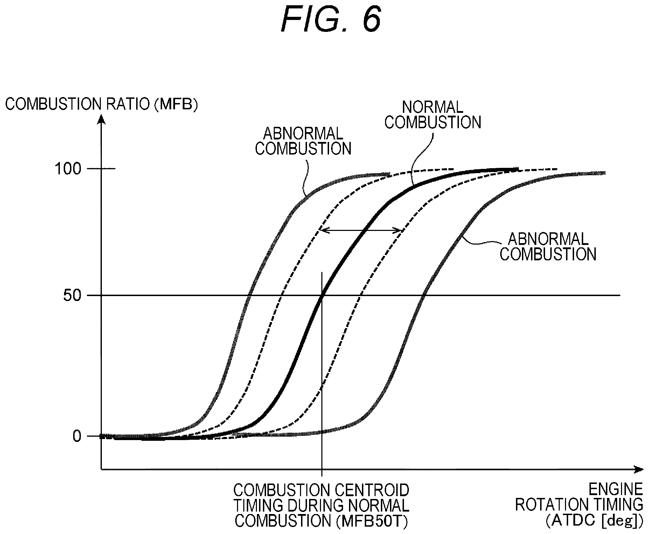

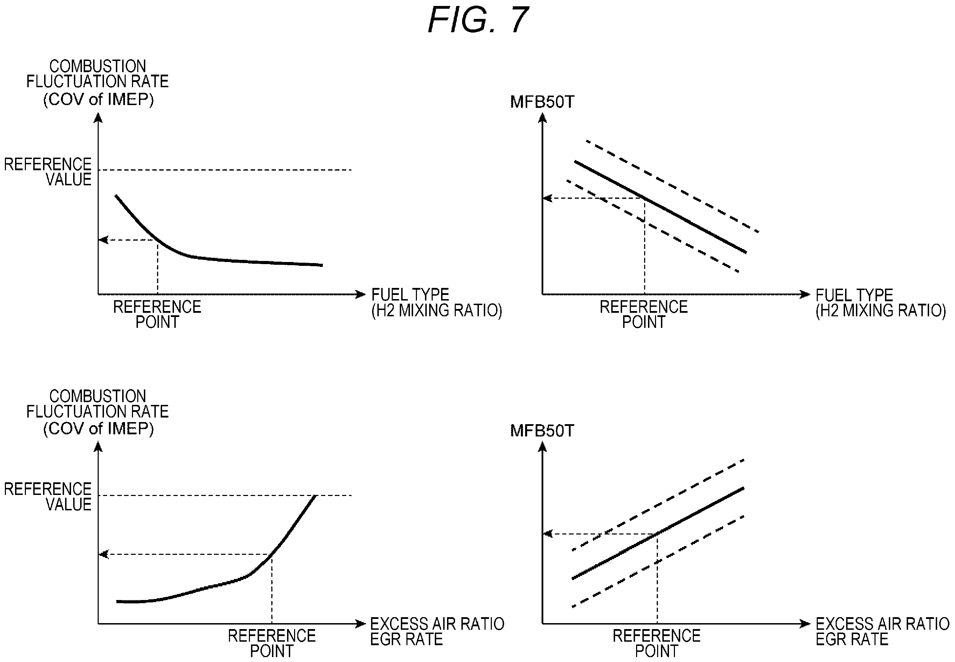

Processing performed by the engine health evaluation unit 3032 installed in the RE fuel supply control controller 303 will be described with reference to FIGS. 6 and 7. FIG. 6 is a graph to illustrate the combustion timing (MFB: Mass Fraction Burnt), and shows the ratio of combustion to the engine rotation timing. The health $E_s$ can be evaluated by the combustion timing and the stability of combustion. Here, the combustion ratio is the ratio with which heat is generated by combustion with respect to the amount of heat of the supplied fuel, and the timing with which the ratio becomes 50% is defined as combustion centroid timing (MFB50T). For example, in a case where impurities are accumulated in the combustion chamber of an engine or when engine oil is likely to be mixed, combustion is performed at an early timing (abnormal combustion on the left side in FIG. 6). On the other hand, if ignitability is poor, or if ignition or flame propagation after ignition is slow, combustion is performed with later timing (abnormal combustion on the right side in FIG. 6). The stability of combustion is represented by the variation rate of the indicated mean effective pressure (COV of IMEP), and the lower the variation rate, the higher the combustion stability. The COV is obtained by dividing the standard deviation of the IMEP (a value obtained by dividing the work amount per cycle by the stroke volume of the engine) of each cycle by the average IMEP. The MFB50T and the COV of IMEP are calculated on the basis of data of 10 cycles or more of the engine.

FIG. 7 is a graph showing the relationships between the fuel type ($H_2$ mixing ratio), the excess air rate and the EGR rate, the combustion timing, and the combustion fluctuation rate. As illustrated in FIG. 7, because the COV of IMEP and the MFB50T are different depending on the fuel type and conditions (engine speed, torque, excess air rate, EGR rate, and the like) supplied to the engine, a reference point for the operation is determined, and the COV of IMEP and the MFB50T under the reference conditions are periodically calculated to calculate the health $E_s$. Here, the EGR rate is an index indicating the degree of recirculation of the discharge gas, and is represented by (intake $CO_2$ concentration - atmospheric $CO_2$ concentration) / (discharge $CO_2$ concentration -

atmospheric $CO_2$ concentration) $\times$ 100.

The health $E_s$ is calculated using the health $E_{s1}$ of the timing of the combustion centroid (MFB50T) and the health $E_{s2}$ of the combustion variation rate (COV of IMEP). $E_{s1}$ and $E_{s2}$ are calculated using Equation 1.

[Equation 1]

$$E_s = E_{s1} + E_{s2}$$

$$E_{s1} = 50 - \frac{a_1|M_i - M_t|}{\sigma_1}$$

$a_1$: Influence coefficient
$E_{s1}$: E-SOH (Engine-State of Health) of MFB50T
$M_i$: MFB50T of each engine
$M_t$: MFB50T reference value
$\sigma_1$: Standard deviation of MFB50T of all engines

$$E_{s2} = 50 - \frac{a_2 (C_i - C_a)}{\sigma_2}$$

$a_2$: Influence coefficient
$C_a$: Average value of COV of IMEP
$C_i$: COV of IMEP of each engine
$E_{s2}$: E-SOH (Engine-State of Health) of COV of IMEP
$\sigma_2$: Standard deviation of COV of IMEP of all engines

Regarding the above Equation 1, the health $E_{s1}$ of the MFB50T is calculated from the absolute value of the difference between the MFB50T ($M_i$) of each engine and the reference value ($M_t$) of the MFB50T and the standard deviation ($\sigma_1$) of the MFB50T of all the target engines. Further, the health $E_{s2}$ of the COV of IMEP is calculated from the difference between the COV of IMEP ($C_i$) of each engine and the average value ($C_a$) of the COV of IMEP of all the target engines, and the standard deviation ($\sigma_2$) of the COV of IMEP of all the target engines. According to the above index, the health $E_{s1}$ of the MFB50T becomes larger as the value is closer to the reference timing, and thus the normality of the combustion timing can be expressed in a relative manner. Further, the health $E_{s2}$ of the COV of IMEP enables the combustion stability to be expressed in a relative manner. In $E_{s1}$ and $E_{s2}$, the degree of impact can be adjusted by the impact coefficients $a_1$ and $a_2$, respectively, and the degree of impact is set according to the impact on the operation side or the like.

A combustion pressure sensor installed on an engine is used to measure the COV of IMEP and the MFB50T. Furthermore, in an engine in which a pressure sensor is not installed, it is possible to perform estimation using a rotation sensor connected to a crank rotation shaft of the engine, a generated current of a generator connected to the crank rotation shaft, and the like.

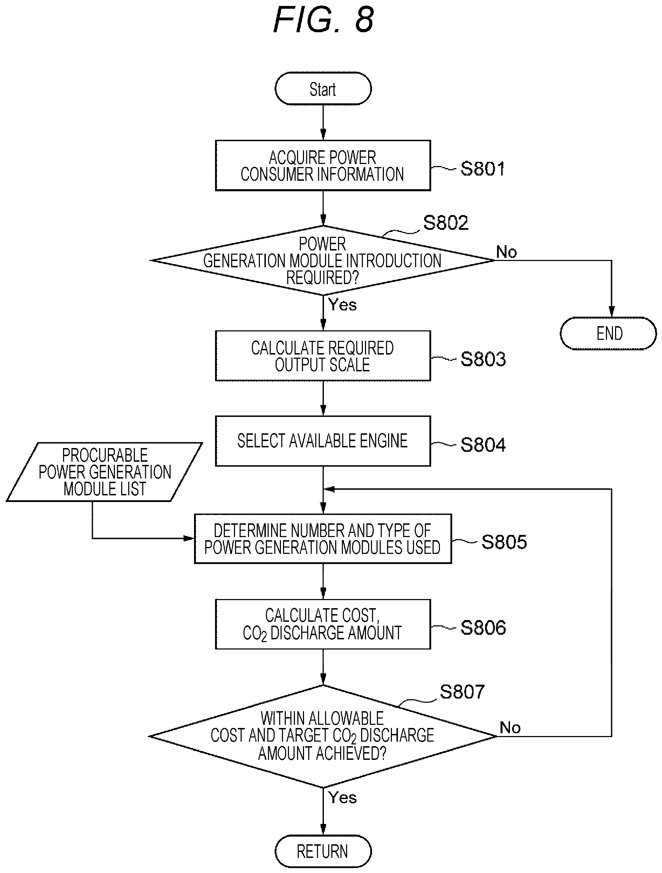

FIG. 8 shows a flow at the time of planning the system introduction to the customer using the power generation module management device 1. Although an example in which each step is executed by any functional unit of power generation module management device 1 will be described below, each step may be executed by another functional unit. In step S801, information on the power consumer who is considering introduction of the power generation module is obtained from the communication unit 33 of the power consumer via the communication unit 11 of the power generation module management device 1. The information on the power consumer includes the type and output of an asset owned or managed by the consumer. In addition, information on short-term (units of seconds) and long-term (units of months) change amounts of power demand and power generation change amounts of private power generation facilities is also included.

The aforementioned asset is a private power generation facility system such as a solar power generation system, a wind power generation system, monogeneration system, or a cogeneration system. In step S802, the power supply information evaluation unit 16 determines the necessity of having a power generation module utilizing RE fuel. For example, in a case where the $CO_2$ reduction and introduction cost targeted by the customer are satisfied by introducing energy storage equipment such as a battery, it is determined that there is no need for a power generation module utilizing RE fuel. Specifically, in many cases, the battery system can handle power fluctuations in units of seconds to several days. In a case where it is determined that the power generation module is required, in step S803, the engine performance information calculation unit 15 calculates a required output scale pertaining to the power demanded by the power consumer 3. Also in this calculation, the output scale is calculated in units of seconds to units of months.

In step S804, the engine selection unit 14 selects an available engine. As an example of this selection method, distributed engines are divided into RE fuel engines and engines other than the RE fuel engines, a ratio of an output by an engine corresponding to the RE fuel and an output by an engine other than the RE fuel is calculated from the information acquired in step S801 regarding the renewable energy available to the power consumer in each period, and a combination of engines satisfying the respective outputs is selected. There may be a plurality of combinations.

In step S805, the power generation module selection unit 13 refers to the procurable power generation module list 101 to determine the number and types of power generation modules in which the engine selected in step S804 is installed.

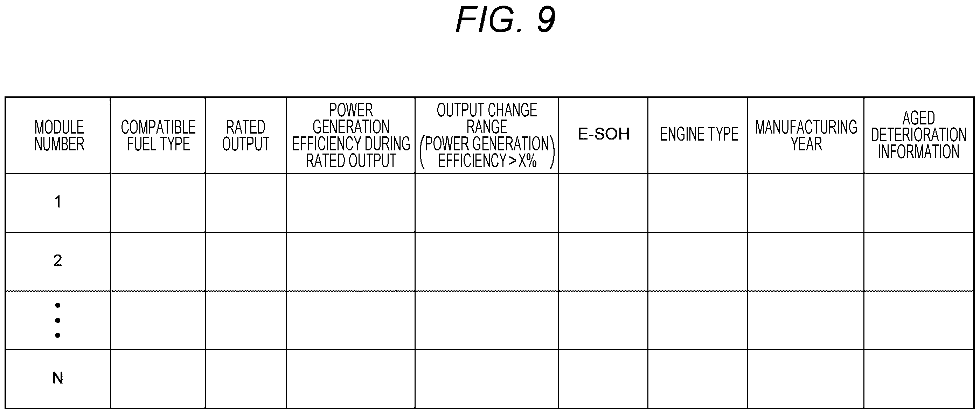

Here, an example of the procurable power generation module list is shown in the table of FIG. 9. Characteristics of the power generation modules are listed one by one. A characteristic item is the type of fuel capable of generating power (corresponding fuel type), and is, for example, the diesel fuel, the spark ignition fuel, or the RE fuel. Although handling of a plurality of compatible fuel types is desirable, a single type is no problem. In addition, there are a rated output, a power generation efficiency at the rated time, an output change range (the power generation efficiency is a predetermined value or more), health ($E_s$) of the power generation module, an engine model, a manufacturing year, aged deterioration information, and the like. The aged deterioration information is, for example, information regarding changes in the E-SOH at each operation time. Changes in power generation efficiency and outputs at each operation time may be included.

The selection, in step S805, of a plurality of power generation modules from the list of power generation modules and the combined provision thereof will now be considered. In the present embodiment, power generation modules capable of handling various types of fuels are selected. Therefore, it is possible to update the modules in accordance with an RE fuel introduction plan of the customer. Solar power generation and wind power generation greatly fluctuate from units of seconds to units of months. Therefore, short-period fluctuations in units of seconds or the like are handled by operation control of the modules, and long-period fluctuations such as in units of days to units of months are handled by changing the combination of modules or the number of modules.

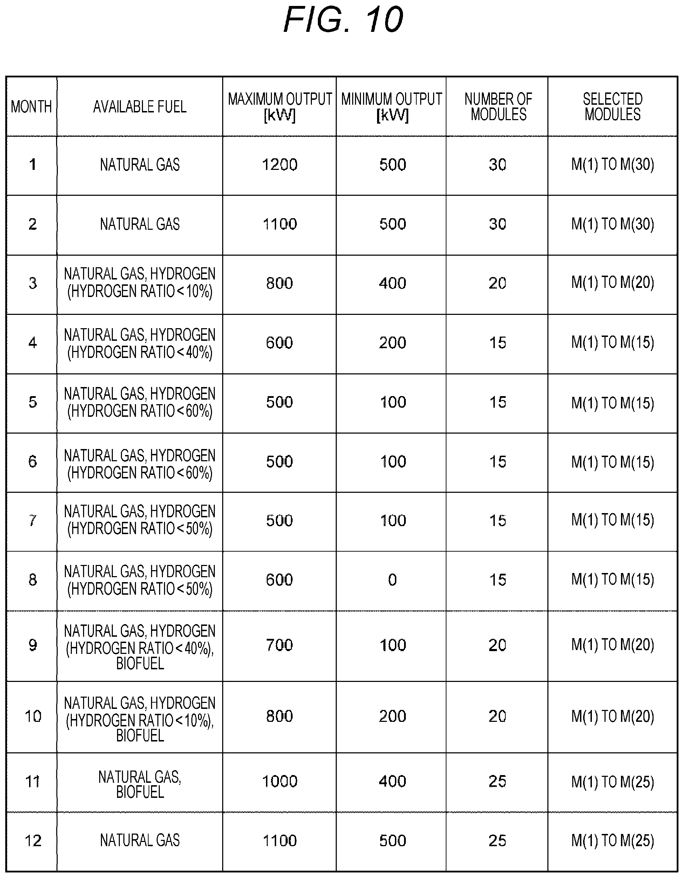

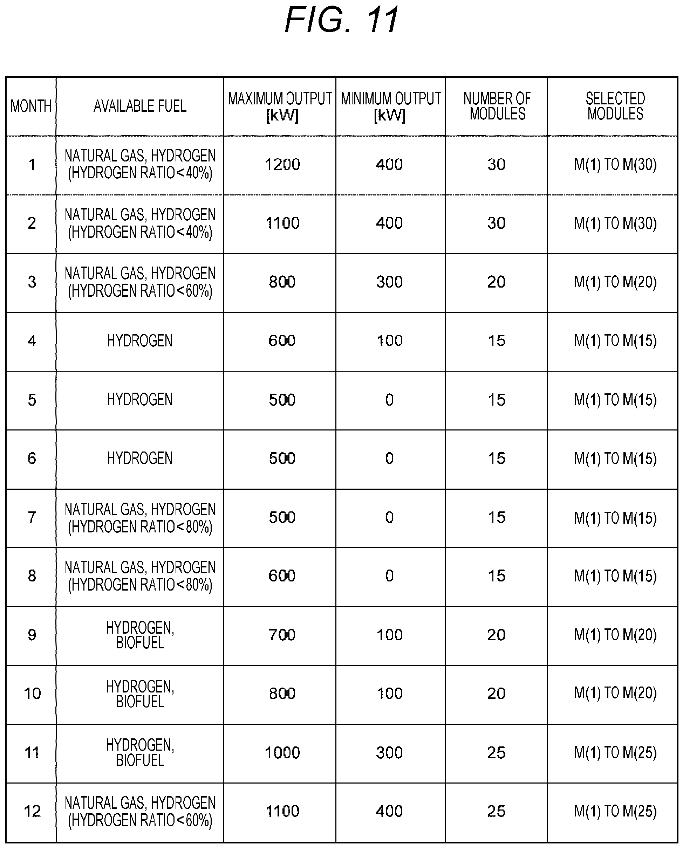

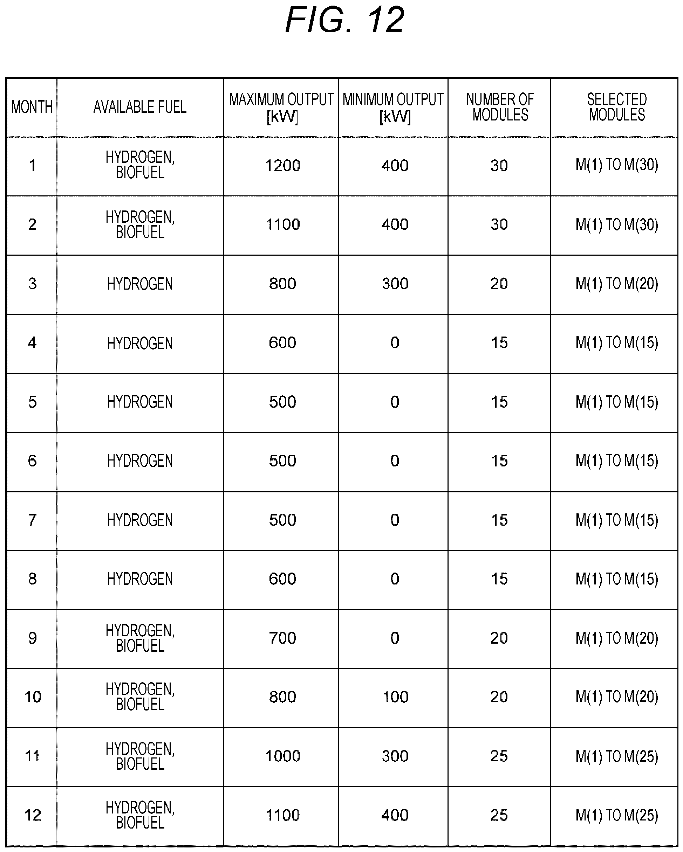

The aforementioned update to the power generation module configuration will be described with reference to FIGS. 10 to 12. FIGS. 10 to 12 illustrate an example of a module usage plan from an initial introduction stage to a final introduction stage and an example of the handling of monthly fluctuations. Specifically, FIG. 10 illustrates a configuration example in the initial introduction stage, FIG. 11 illustrates a configuration example in a middle introduction stage, and FIG. 12 illustrates a configuration example in the final introduction stage. For example, in the initial introduction stage, because there are many cases where the amount of renewable energy is small and the amount of available RE fuel is small, the operation is performed mainly using natural gas. Further, in May to August in FIG. 10, the ratio of hydrogen in the available fuel is higher than that in other months. This is because the supply of renewable energy such as wind turbines and solar power generation becomes excessive due to the supply and demand balance of power, and the procurement of hydrogen supply utilizing surplus power becomes active.

Furthermore, the amount of biofuel that can be generated from agricultural waste and plants such as wood is subject to large seasonal variations. In a case where crops and plants are harvested or grown from spring to summer, the crops and plants can then be used as biofuel in autumn. (September to November in FIG. 10). In addition, at the initial introduction stage, there are periods when RE power becomes insufficient due to the power demand-supply balance, but in that case, it is possible to operate using only natural gas (January to February and December in FIG. 10).

In addition, customer power demand changes throughout the year. Therefore, the number of modules is adjusted every month. (FIG. 10 shows an example of the fluctuation ranges of 15 to 30 modules). As a result, the operation rate of the power generation module can be improved. In addition, because the power generation module that is not in use can be deployed to another power consumer or another site of the same power consumer, the power generation module asset can be efficiently operated.

Thereafter, because the amount of RE fuel procured increases from the middle stage to the final stage of introduction, there is a change in the type and amount of available fuel. FIG. 11 is an example of the number and types of power generation modules used in the middle stage of introduction (5 to 10 years after introduction). In contrast to the initial stage of introduction in FIG. 10, the operation shifts from natural gas being used as the main fuel to RE fuel, that is, hydrogen and biofuel being used as the main fuel. Natural gas is used in periods of insufficient renewable energy (January to March, and December).

FIG. 12 is an example of the number and types of power generation modules used in the final introduction stage (10 or more years after introduction). In this case, only the RE fuel is operated. Although the RE fuel is described as hydrogen and biofuel in the present description, ammonia or eFuel, which is a synthetic fuel, may be used. As described above, by operating the power generation modules while changing the power generation modules in stages in accordance with situations where RE fuel can be introduced, it is possible to seamlessly transition to carbon neutral, and an RE100 implementation can be achieved without difficulty.

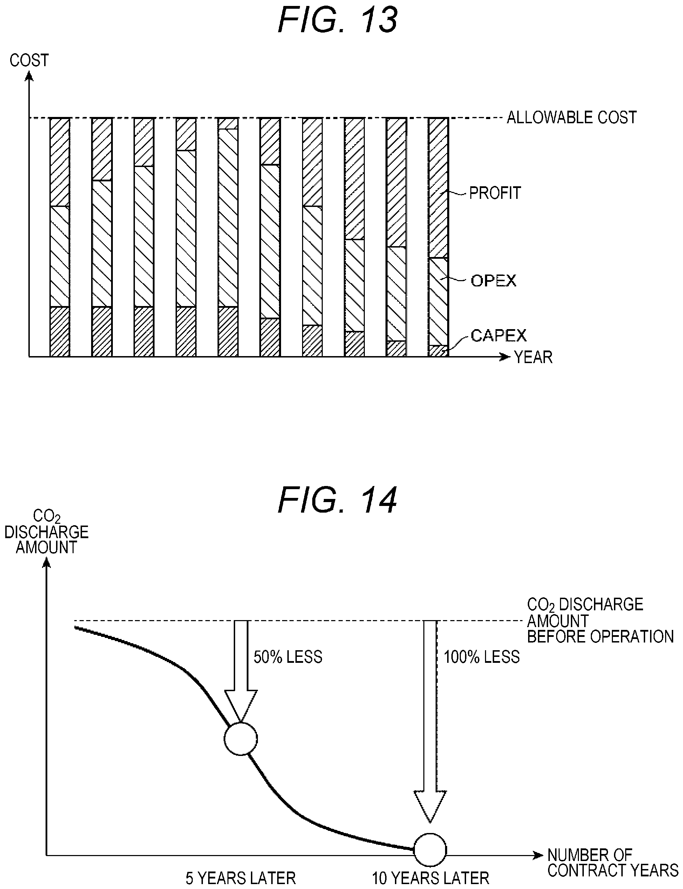

The process flow returns to the flowchart of FIG. 8 again. After determining the number and types of power generation modules to be used in step S805, the cost/-$CO_2$ discharge amount calculation unit 12 performs a calculation of the cost and the $CO_2$ discharge amount in step S806. FIGS. 13 and 14 illustrate examples of costs and $CO_2$ calculation results. As illustrated in FIG. 13, the costs include the profits of CAPEX, OPEX, and power generation module providers. The customer side can determine whether to receive the provision of the power generation modules from the standpoint of whether costs fall within allowable costs.

In addition, FIG. 14 shows the $CO_2$ discharge amounts predicted as contract years elapse. For example, it is examined in step S807 whether the power consumer aims to reduce $CO_2$ by 50% after 5 years and to reduce $CO_2$ by 100% after 10 years, and clears the allowable cost (cost paid by the power consumer) at that time. When not cleared, the number and types of power generation modules to be used are selected again in step S805. When the allowable cost and the target $CO_2$ discharge amount are cleared, the power generation modules are introduced to the power consumer. Because the information in step S801 is different for each power consumer, the flow of FIG. 8 is performed for each power consumer.

As described above, the planning of the power generation module introduction plan illustrated in FIG. 8 follows a flow in which, after the power generation module configuration is determined in step S805, the cost and the $CO_2$ discharge amount are calculated and presented to the power consumer, and hence the power consumer determines whether or not to introduce the power generation modules. In other words, in step S805, the combination of engines satisfying the allowable cost of the power consumer and the target $CO_2$ discharge amount is selected from the combination of the plurality of engines selected in S804.

The following advantageous effects can be obtained by utilizing the power generation module management device having the above-described functions.

Power can be supplied to a power consumer in a resilient manner. That is, even in periods when it is difficult for the power consumer to procure renewable energy power or in periods when it is difficult to supply RE fuel, power generation including the use of fossil fuel can be performed according to the situation, and hence power can be supplied irrespective of a situation where there are fluctuations in renewable energy. Because the power generation module supplies power by combining a plurality of modules, module replacement can be easily performed while supplying power. In addition, changes according to the situation can be made immediately.

It is also possible for the power consumer to reduce the $CO_2$ discharge amount while minimizing the cost. That is, a renewable energy fluctuation state is changed in units of seconds to units of months. Therefore, the amount of renewable energy power generation owned by the power consumer changes, or the type of RE fuel that can be procured changes. Accordingly, the power generation modules yielding the lowest cost and the maximum $CO_2$ reduction can be selected and recombined. The engine, the generator, and the converter, which are components of a power generation module, are mass-produced components that can be used for automobiles and the like, and thus are low-cost components. In addition, because the engine is equipped with an RE handling device, the engine is a mechanism capable of handling RE fuel, fossil fuel, and fuels utilizing a plurality of such fuels, and thus, it is possible to generate power by means of a low-cost power generation module using inexpensive RE fuel and fossil fuel which are procurable.

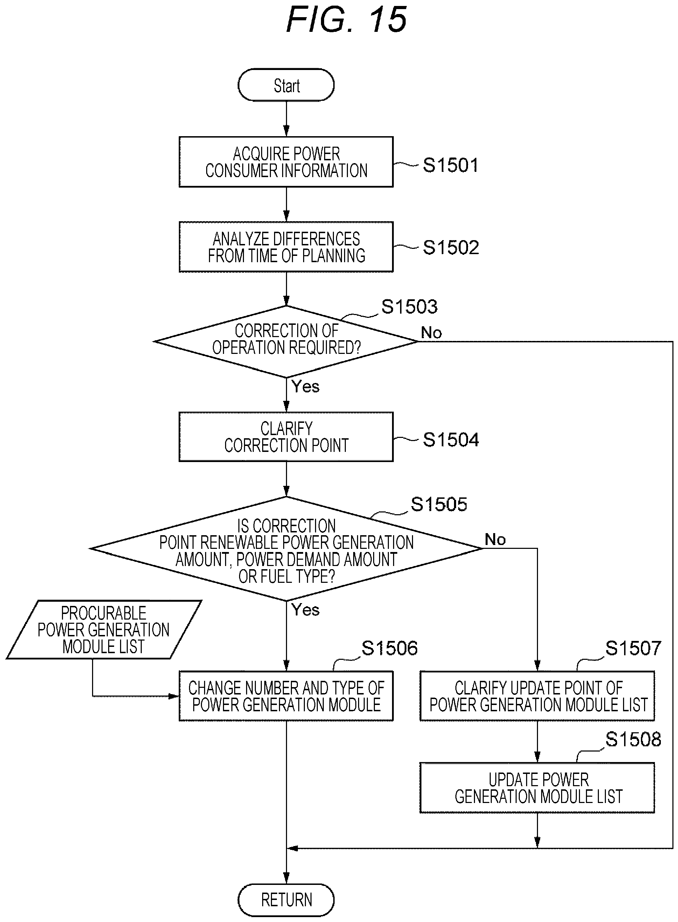

FIG. 15 is a flowchart illustrating an operation method after the power generation modules are introduced to the power consumer. After the power generation module is introduced, in step S1501, the power generation amount data and the fuel consumption amount data of the power consumer, and the health ($E_s$) of the introduced power generation modules are acquired via the communication unit 11. In step S1502, the power supply information evaluation unit 16 performs an analysis of the difference between the values of the data and values predicted at the time of planning. Specifically, in a case where the cost or the $CO_2$ discharge amount illustrated in FIGS. 13 and 14 changes by a predetermined value or more, it is determined that the operation needs to be corrected (step S1503).

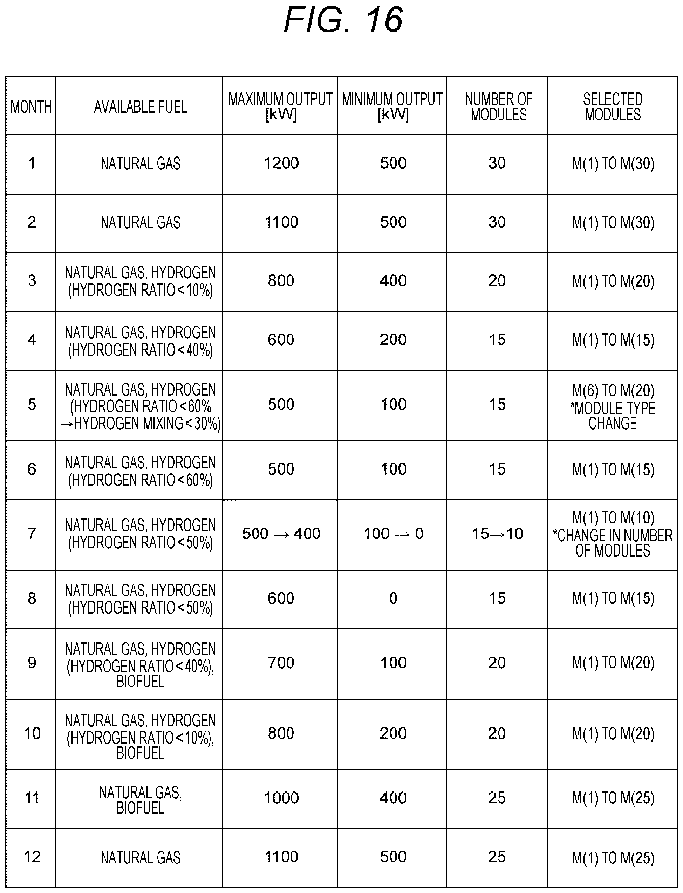

In a case where it is necessary to correct the operation, the correction point is clarified in step S1504, and in a case where it is necessary to correct any one of the renewable power generation amount, the power demand amount, and the fuel type of the power consumer in step S1505, the procurable power generation module list 101 is referred to, and the number and type of power generation modules are changed in step S1506. That is, the processing illustrated in FIG. 8 is performed again. For example, a case such as that illustrated in FIG. 16 may be considered as the aforementioned update to the power generation module configuration in the middle of operation.

For example, in a case where the procurement of hydrogen as RE fuel is less than planned, the maximum value of the hydrogen mixing ratio decreases from 60% to 30% (May). Accordingly, the type of the selected modules is changed to a type with which the hydrogen supply ratio is low. Furthermore, for example, a scale may be considered with which the maximum output and the minimum output of the power generation module become smaller than the plan when the amount of renewable power generation owned or managed by the power consumer becomes higher than the plan (July). In this case, the number of modules can be changed.

In a case where it is determined in step S1507 that the correction point is not any of the amount of renewable energy power generation owned by the power consumer, the amount of power demand, and the fuel type, because the cause is the change in the performance of the introduced power generation modules, the updated portion of the database of the power generation module is clarified in step S1507. For example, in a case where the decrease in the E-SOH becomes significant, the maintenance period or the power generation module replacement period due to the deterioration in durability changes, and thus the value of the E-SOH in FIG. 9 is updated. In addition, the values in FIG. 9 are similarly updated in a case where the rated output or the power generation efficiency changes. The aged deterioration information for the power generation module of the same model as the updated module number is updated. Note that the above processing other than step S1506 is executed by, for example, the power supply information evaluation unit 16.

According to the embodiment of the present invention described above, the following actions and effects are obtained.

(1) A power generation module management device according to the present invention is a power generation module management device that is used by a power consumer and that manages, according to an amount of power requested by the power consumer, a configuration of power generation sources including at least one power generation module, the device including a storage unit that records power demand information relating to the amount of power requested by the power consumer and a procurable power generation module list in which procurable power generation modules are recorded, wherein the device selects the power generation module capable of outputting the amount of power requested by the power consumer, from the procurable power generation module list, on the basis of the power demand information and a type of fuel available to the power consumer.

According to the above configuration, it is possible to reduce risk of failure, improve ease of servicing and maintenance, and shorten a lead time by selecting an engine generator that can be provided for an energy demand situation of a power consumer and the type of RE fuel that can be used, and by selecting an engine generator (power generation module) according to a health state thereof. In addition, because the optimal number of devices and the optimal type of devices can be selected according to the energy consumption of the power consumer and the type of the available fuel, the optimal power can be supplied to the power consumer, and the effective use of the energy resources and the reduction of $CO_2$ can be implemented at low cost.

(2) The power demand information is information that varies in predetermined periods, and the power generation module management device selects the power generation module in conjunction with the power demand information that varies in the predetermined periods. Accordingly, it is possible to form a power generation module configuration that corresponds to the fuel supply and demand situation which changes every season, thus enabling the power generation modules to be used effectively.

(3) When the power generation module is to be selected, the power generation module management device calculates a cost to be charged to the power consumer which is generated by introducing the power generation module, and a carbon dioxide discharge amount which is reduced by continuously operating the power generation module. Accordingly, the cost required for implementing the reduction of carbon dioxide discharge amount desired by the consumer can be presented to the power consumer, and it is possible to determine whether or not to introduce the power generation module depending on whether or not the cost falls within the allowable cost for the power consumer.

(4) Operational information relating to operation of the power generation module is also recorded in the storage unit and, in a case where at least one of the incurred cost and the reduced carbon dioxide discharge amount is dissociated by a predetermined value from the calculated cost or the carbon dioxide discharge amount, the power generation module management device determines whether or not the dissociation is based on a change in the operational information. Accordingly, it is possible to update the power generation module configuration even after the power generation module is introduced, and it is possible to appropriately handle power generation module deterioration or the like caused by operation.

(5) In a case where the dissociation is based on the change in the operational information, the power generation module is selected again according to the change and, in a case where the dissociation is not based on the change in the operational information, it is determined that the dissociation is based on the change in performance of the power generation module, and the power generation module list is updated on a basis of the change. Accordingly, it is possible to determine whether the power generation module configuration is to be updated in the middle of operation or can be handled only by updating the list.

(6) The change in performance of the power generation module is a change in any one of health, rated output, and power generation efficiency of the power generation module. Accordingly, the power generation module can be efficiently managed by accumulating, in the list, various pieces of information on the power generation module.

(7) The health is calculated using either combustion timing or combustion stability when at least one of a power generation output of the power generation module, a type of supply fuel supplied to an engine included in the power generation module, an EGR rate of the engine, and an excess air rate is taken as a criterion. Accordingly, it is possible to appropriately determine the state of the engine by using data that can be easily acquired using a sensor or the like.

(8) The power generation source includes a plurality of the power generation modules, the plurality of power generation modules being capable of combining generated power by using either a direct current or an alternating current and supplying the combined power, and both a renewable energy-derived fuel and a fossil fuel are suppliable to each of the engines included in the plurality of power generation modules. Accordingly, because various power generation modules and engines can be used, it is possible to provide various options for the power generation module configuration.

The technical scope of the present invention is not limited to the scope disclosed in the above embodiment, and various modifications are included without departing from the main features of the present invention. Therefore, the above-described embodiment is merely illustrative and should not be interpreted in a limited manner. Moreover, it is possible to add, delete, and replace other configurations with respect to part of the configuration of each embodiment, and all configurations are within the scope of the present invention.

Reference Signs List

    1 power generation module management device
    3 power consumer
    30 power generation module
    100 storage unit
    101 procurable power generation module list
    102 operational information
    103 power demand information

## Claims

1. A power generation module management device that is used by a power consumer and that manages, according to an amount of power requested by the power consumer, a configuration of power generation sources including at least one power generation module, the power generation module management device comprising

    a storage unit that records power demand information relating to the amount of power requested by the power consumer and a procurable power generation module list in which procurable power generation modules are recorded,
    wherein the power generation module management device selects the power generation module capable of outputting the amount of power requested by the power consumer, from the procurable power generation module list, on a basis of the power demand information and a type of fuel available to the power consumer.

2. The power generation module management device according to claim 1, wherein

    the power demand information is information that varies in predetermined periods, and
    the power generation module management device selects the power generation module in conjunction with the power demand information that varies in the predetermined periods.

3. The power generation module management device according to claim 1, wherein when the power generation module is to be selected, the power generation module management device calculates a cost to be charged to the power consumer which is generated by introducing the power generation module, and a carbon dioxide discharge amount which is reduced by continuously operating the power generation module.

4. The power generation module management device according to claim 3, wherein

operational information relating to operation of the power generation module is also recorded in the storage unit, and
in a case where at least one of the incurred cost and the reduced carbon dioxide discharge amount is dissociated by a predetermined value from the calculated cost or the carbon dioxide discharge amount, the power generation module management device determines whether or not the dissociation is based on a change in the operational information.

5. The power generation module management device according to claim 4, wherein

in a case where the dissociation is based on the change in the operational information, the power generation module is selected again according to the change, and
in a case where the dissociation is not based on the change in the operational information, it is determined that the dissociation is based on a change in performance of the power generation module, and the procurable power generation module list is updated on a basis of the change.

6. The power generation module management device according to claim 5, wherein the change in performance of the power generation module is a change in any one of health, rated output, and power generation efficiency of the power generation module.

7. The power generation module management device according to claim 6, wherein the health is calculated using either combustion timing or combustion stability when at least one of a power generation output of the power generation module, a type of supply fuel supplied to an engine included in the power generation module, an EGR rate of the engine, and an excess air rate is taken as a criterion.

8. The power generation module management device according to claim 1, wherein

the power generation source includes a plurality of the power generation modules, the plurality of power generation modules being capable of combining generated power by using either a direct current or an alternating current and supplying the combined power, and

both a renewable energy-derived fuel and a fossil fuel are suppliable to each of the engines included in the plurality of power generation modules.

# FIG. 1

1 POWER GENERATION MODULE MANAGEMENT DEVICE

16 POWER SUPPLY INFORMATION EVALUATION UNIT

15 ENGINE PERFORMANCE INFORMATION CALCULATION UNIT

14 ENGINE SELECTION UNIT

13 POWER GENERATION MODULE SELECTION UNIT

12 COST/$CO_2$ DISCHARGE AMOUNT CALCULATION UNIT

11 COMMUNICATION UNIT

100 STORAGE UNIT

103 POWER DEMAND INFORMATION

102 OPERATIONAL INFORMATION

101 PROCURABLE POWER GENERATION MODULE LIST

2

3 POWER CONSUMER

30 POWER GENERATION MODULE

300 RE-HANDLING DEVICE

301 RE FUEL TANK

302 RE FUEL SUPPLY DEVICE

303 RE FUEL SUPPLY CONTROL CONTROLLER

304 STORAGE UNIT

31 ENGINE

32 GENERATOR/ CONVERTER

33 COMMUNICATION UNIT

RE-COMP

RE FUEL

RE F CONTRO

STORAGE UNIT

COMMUNICATION UNIT

RE-COMP

RE

RE FUEL

RE F CONTRO

STORAGE UNIT

COMMUNICATION UNIT

# FIG. 2

# FIG. 3

## FIG. 4

302

FUEL 1 INLET ------▶

PRESSURE SENSOR

INJECTOR 1

FUEL 2 INLET ▶

INJECTOR 2

RENEWABLE
ENERGY
FUEL OUTLET

EP 4 468 550 A1

## FIG. 5

RE FUEL SUPPLY CONTROL CONTROLLER 303

SENSOR INPUT UNIT 3031

HEALTH EVALUATION UNIT 3032

CONTROL UNIT 3033

VARIOUS SENSORS

STORAGE UNIT 304

RE FUEL SUPPLY DEVICE

INJECTOR

SPARK IGNITION DEVICE

THROTTLE

EGR VALVE

GENERATOR/CONVERTER

EP 4 468 550 A1

## FIG. 6

COMBUSTION RATIO (MFB)

ABNORMAL COMBUSTION

NORMAL COMBUSTION

ABNORMAL COMBUSTION

100

50

0

COMBUSTION CENTROID TIMING DURING NORMAL COMBUSTION (MFB50T)

ENGINE ROTATION TIMING (ATDC [deg])

# FIG. 7

EP 4 468 550 A1

## FIG. 8

```
              ( Start )
                  |
                  v
      ┌──────────────────────┐
      │   ACQUIRE POWER      │ ── S801
      │ CONSUMER INFORMATION │
      └──────────────────────┘
                  |
                  v                          S802
             ◇ POWER
   GENERATION MODULE INTRODUCTION ◇ ── No ──→ ( END )
             REQUIRED? ◇
                  |
                 Yes
                  v
      ┌──────────────────────┐
      │  CALCULATE REQUIRED  │ ── S803
      │     OUTPUT SCALE     │
      └──────────────────────┘
                  |
                  v
      ┌──────────────────────┐
      │ SELECT AVAILABLE     │ ── S804
      │      ENGINE          │
      └──────────────────────┘
                  |
   ┌──────────────┐     |
   │ PROCURABLE   │     |
   │ POWER        │     v
   │ GENERATION   │──→ ┌──────────────────────────────┐
   │ MODULE LIST  │    │ DETERMINE NUMBER AND TYPE OF  │ ── S805
   └──────────────┘    │ POWER GENERATION MODULES USED │
                       └──────────────────────────────┘
                                  |
                                  v
                       ┌──────────────────────┐
                       │   CALCULATE COST,    │ ── S806
                       │ CO2 DISCHARGE AMOUNT │
                       └──────────────────────┘
                                  |
                                  v          S807
                        ◇ WITHIN ALLOWABLE
              COST AND TARGET CO2 DISCHARGE ◇ ── No ──┐
                        AMOUNT ACHIEVED? ◇            │
                                  |                   │
                                 Yes                  │
                                  v                   │
                            ( RETURN )                │
```

FIG. 9

| MODULE NUMBER | COMPATIBLE FUEL TYPE | RATED OUTPUT | POWER GENERATION EFFICIENCY DURING RATED OUTPUT | OUTPUT CHANGE RANGE (POWER GENERATION EFFICIENCY > X%) | E-SOH | ENGINE TYPE | MANUFACTURING YEAR | AGED DETERIORATION INFORMATION |
|---|---|---|---|---|---|---|---|---|
| 1 | | | | | | | | |
| 2 | | | | | | | | |
| ⋮ | | | | | | | | |
| N | | | | | | | | |

# FIG. 10

| MONTH | AVAILABLE FUEL | MAXIMUM OUTPUT [kW] | MINIMUM OUTPUT [kW] | NUMBER OF MODULES | SELECTED MODULES |
|---|---|---|---|---|---|
| 1 | NATURAL GAS | 1200 | 500 | 30 | M(1) TO M(30) |
| 2 | NATURAL GAS | 1100 | 500 | 30 | M(1) TO M(30) |
| 3 | NATURAL GAS, HYDROGEN (HYDROGEN RATIO < 10%) | 800 | 400 | 20 | M(1) TO M(20) |
| 4 | NATURAL GAS, HYDROGEN (HYDROGEN RATIO < 40%) | 600 | 200 | 15 | M(1) TO M(15) |
| 5 | NATURAL GAS, HYDROGEN (HYDROGEN RATIO < 60%) | 500 | 100 | 15 | M(1) TO M(15) |
| 6 | NATURAL GAS, HYDROGEN (HYDROGEN RATIO < 60%) | 500 | 100 | 15 | M(1) TO M(15) |
| 7 | NATURAL GAS, HYDROGEN (HYDROGEN RATIO < 50%) | 500 | 100 | 15 | M(1) TO M(15) |
| 8 | NATURAL GAS, HYDROGEN (HYDROGEN RATIO < 50%) | 600 | 0 | 15 | M(1) TO M(15) |
| 9 | NATURAL GAS, HYDROGEN (HYDROGEN RATIO < 40%), BIOFUEL | 700 | 100 | 20 | M(1) TO M(20) |
| 10 | NATURAL GAS, HYDROGEN (HYDROGEN RATIO < 10%), BIOFUEL | 800 | 200 | 20 | M(1) TO M(20) |
| 11 | NATURAL GAS, BIOFUEL | 1000 | 400 | 25 | M(1) TO M(25) |
| 12 | NATURAL GAS | 1100 | 500 | 25 | M(1) TO M(25) |

# FIG. 11

| MONTH | AVAILABLE FUEL | MAXIMUM OUTPUT [kW] | MINIMUM OUTPUT [kW] | NUMBER OF MODULES | SELECTED MODULES |
|---|---|---|---|---|---|
| 1 | NATURAL GAS, HYDROGEN (HYDROGEN RATIO < 40%) | 1200 | 400 | 30 | M(1) TO M(30) |
| 2 | NATURAL GAS, HYDROGEN (HYDROGEN RATIO < 40%) | 1100 | 400 | 30 | M(1) TO M(30) |
| 3 | NATURAL GAS, HYDROGEN (HYDROGEN RATIO < 60%) | 800 | 300 | 20 | M(1) TO M(20) |
| 4 | HYDROGEN | 600 | 100 | 15 | M(1) TO M(15) |
| 5 | HYDROGEN | 500 | 0 | 15 | M(1) TO M(15) |
| 6 | HYDROGEN | 500 | 0 | 15 | M(1) TO M(15) |
| 7 | NATURAL GAS, HYDROGEN (HYDROGEN RATIO < 80%) | 500 | 0 | 15 | M(1) TO M(15) |
| 8 | NATURAL GAS, HYDROGEN (HYDROGEN RATIO < 80%) | 600 | 0 | 15 | M(1) TO M(15) |
| 9 | HYDROGEN, BIOFUEL | 700 | 100 | 20 | M(1) TO M(20) |
| 10 | HYDROGEN, BIOFUEL | 800 | 100 | 20 | M(1) TO M(20) |
| 11 | HYDROGEN, BIOFUEL | 1000 | 300 | 25 | M(1) TO M(25) |
| 12 | NATURAL GAS, HYDROGEN (HYDROGEN RATIO < 60%) | 1100 | 400 | 25 | M(1) TO M(25) |

# FIG. 12

| MONTH | AVAILABLE FUEL | MAXIMUM OUTPUT [kW] | MINIMUM OUTPUT [kW] | NUMBER OF MODULES | SELECTED MODULES |
|---|---|---|---|---|---|
| 1 | HYDROGEN, BIOFUEL | 1200 | 400 | 30 | M(1) TO M(30) |
| 2 | HYDROGEN, BIOFUEL | 1100 | 400 | 30 | M(1) TO M(30) |
| 3 | HYDROGEN | 800 | 300 | 20 | M(1) TO M(20) |
| 4 | HYDROGEN | 600 | 0 | 15 | M(1) TO M(15) |
| 5 | HYDROGEN | 500 | 0 | 15 | M(1) TO M(15) |
| 6 | HYDROGEN | 500 | 0 | 15 | M(1) TO M(15) |
| 7 | HYDROGEN | 500 | 0 | 15 | M(1) TO M(15) |
| 8 | HYDROGEN | 600 | 0 | 15 | M(1) TO M(15) |
| 9 | HYDROGEN, BIOFUEL | 700 | 0 | 20 | M(1) TO M(20) |
| 10 | HYDROGEN, BIOFUEL | 800 | 100 | 20 | M(1) TO M(20) |
| 11 | HYDROGEN, BIOFUEL | 1000 | 300 | 25 | M(1) TO M(25) |
| 12 | HYDROGEN, BIOFUEL | 1100 | 400 | 25 | M(1) TO M(25) |

## FIG. 13

## FIG. 14

# FIG. 15

```
                    ┌─────────┐
                    │  Start  │
                    └────┬────┘
                         │
                         ▼
          ┌──────────────────────────┐
          │    ACQUIRE POWER         │──── S1501
          │ CONSUMER INFORMATION     │
          └──────────┬───────────────┘
                     │
                     ▼
          ┌──────────────────────────┐
          │  ANALYZE DIFFERENCES     │──── S1502
          │  FROM TIME OF PLANNING   │
          └──────────┬───────────────┘
                     │
                     ▼         S1503
                ◇─────────────◇        No
              ◇  CORRECTION OF  ◇───────────────────────┐
              ◇ OPERATION REQUIRED? ◇                    │
                ◇─────────────◇                          │
                     │ Yes                               │
                     ▼                                   │
          ┌──────────────────────────┐                  │
          │      CLARIFY             │──── S1504         │
          │  CORRECTION POINT        │                   │
          └──────────┬───────────────┘                   │
                     │              S1505                 │
                     ▼                                    │
              ◇───────────────────◇                      │
            ◇    IS CORRECTION       ◇   No               │
            ◇ POINT RENEWABLE POWER   ◇──────────┐        │
            ◇ GENERATION AMOUNT, POWER◇          │        │
            ◇  DEMAND AMOUNT OR       ◇          │        │
            ◇    FUEL TYPE?          ◇           │        │
              ◇───────────────────◇             │        │
                     │ Yes                       │        │
  ┌───────────────┐  │                           │        │
  │  PROCURABLE   │  │       S1506               │ S1507  │
  │POWER GENERATION│ ▼                           ▼        │
  │ MODULE LIST   │──┤                                    │
  └───────────────┘  ▼                                    │
          ┌──────────────────────┐  ┌────────────────────┐│
          │ CHANGE NUMBER AND    │  │ CLARIFY UPDATE     ││
          │ TYPE OF POWER        │  │ POINT OF POWER     ││
          │ GENERATION MODULE    │  │ GENERATION MODULE  ││
          └──────────┬───────────┘  │ LIST               ││
                     │              └─────────┬──────────┘│
                     │                        │  S1508     │
                     │                        ▼            │
                     │              ┌────────────────────┐ │
                     │              │  UPDATE POWER      │ │
                     │              │ GENERATION MODULE  │ │
                     │              │ LIST               │ │
                     │              └─────────┬──────────┘ │
                     │                        │            │
                     │◄───────────────────────┴────────────┘
                     ▼
                ┌─────────┐
                │ RETURN  │
                └─────────┘
```

# FIG. 16

| MONTH | AVAILABLE FUEL | MAXIMUM OUTPUT [kW] | MINIMUM OUTPUT [kW] | NUMBER OF MODULES | SELECTED MODULES |
|---|---|---|---|---|---|
| 1 | NATURAL GAS | 1200 | 500 | 30 | M(1) TO M(30) |
| 2 | NATURAL GAS | 1100 | 500 | 30 | M(1) TO M(30) |
| 3 | NATURAL GAS, HYDROGEN (HYDROGEN RATIO < 10%) | 800 | 400 | 20 | M(1) TO M(20) |
| 4 | NATURAL GAS, HYDROGEN (HYDROGEN RATIO < 40%) | 600 | 200 | 15 | M(1) TO M(15) |
| 5 | NATURAL GAS, HYDROGEN (HYDROGEN RATIO < 60% →HYDROGEN MIXING < 30%) | 500 | 100 | 15 | M(6) TO M(20) *MODULE TYPE CHANGE |
| 6 | NATURAL GAS, HYDROGEN (HYDROGEN RATIO < 60%) | 500 | 100 | 15 | M(1) TO M(15) |
| 7 | NATURAL GAS, HYDROGEN (HYDROGEN RATIO < 50%) | 500 → 400 | 100 → 0 | 15→10 | M(1) TO M(10) *CHANGE IN NUMBER OF MODULES |
| 8 | NATURAL GAS, HYDROGEN (HYDROGEN RATIO < 50%) | 600 | 0 | 15 | M(1) TO M(15) |
| 9 | NATURAL GAS, HYDROGEN (HYDROGEN RATIO < 40%), BIOFUEL | 700 | 100 | 20 | M(1) TO M(20) |
| 10 | NATURAL GAS, HYDROGEN (HYDROGEN RATIO < 10%), BIOFUEL | 800 | 200 | 20 | M(1) TO M(20) |
| 11 | NATURAL GAS, BIOFUEL | 1000 | 400 | 25 | M(1) TO M(25) |
| 12 | NATURAL GAS | 1100 | 500 | 25 | M(1) TO M(25) |

## INTERNATIONAL SEARCH REPORT

| International application No. |
| --- |
| **PCT/JP2022/045677** |

**A. CLASSIFICATION OF SUBJECT MATTER**

*H02J 3/46*(2006.01)i; *G06Q 50/06*(2012.01)i; *H02J 3/38*(2006.01)i; *H02J 13/00*(2006.01)i
FI: H02J3/46; G06Q50/06; H02J3/38 110; H02J13/00 301A

According to International Patent Classification (IPC) or to both national classification and IPC

**B. FIELDS SEARCHED**

Minimum documentation searched (classification system followed by classification symbols)

H02J3/46; G06Q50/06; H02J3/38; H02J13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2003-193863 A (MITSUBISHI HEAVY IND LTD) 09 July 2003 (2003-07-09) paragraphs [0024]-[0061], fig. 1-20 | 1-4, 8 |
| A | | 5-7 |
| Y | JP 2004-85509 A (MITSUBISHI HEAVY IND LTD) 18 March 2004 (2004-03-18) paragraphs [0014]-[0046], fig. 1-9 | 1-4, 8 |
| A | | 5-7 |
| Y | JP 2006-4080 A (TOSHIBA CORP) 05 January 2006 (2006-01-05) paragraphs [0003]-[0005], [0013], [0028]-[0029] | 3, 4 |
| A | | 5-7 |
| Y | WO 2017/221411 A1 (MITSUBISHI ELECTRIC CORPORATION) 28 December 2017 (2017-12-28) paragraphs [0058]-[0071], fig. 3, 10 | 4 |
| A | | 5-7 |
| Y | JP 2018-206302 A (RENAISSANCE ENERGY RES KK) 27 December 2018 (2018-12-27) paragraphs [0041], [0045] | 8 |

☑ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 February 2023** | **28 February 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 468 550 A1

**INTERNATIONAL SEARCH REPORT**

International application No.

**PCT/JP2022/045677**

## C. DOCUMENTS CONSIDERED TO BE RELEVANT

| Category* | Citation of document, with indication, where appropriate, of the relevant passages | Relevant to claim No. |
|---|---|---|
| A | JP 2003-111275 A (HITACHI LTD) 11 April 2003 (2003-04-11)<br>paragraphs [0001]-[0040], fig. 1-7 | 1-8 |
| A | WO 2017/094138 A1 (MITSUBISHI ELECTRIC CORPORATION) 08 June 2017 (2017-06-08)<br>paragraphs [0001]-[0006], [0010]-[0143], fig. 1-24 | 5-7 |
| A | JP 2019-148200 A (HITACHI AUTOMOTIVE SYSTEMS LTD) 05 September 2019 (2019-09-05)<br>paragraphs [0002]-[0004] | 7 |

Form PCT/ISA/210 (second sheet) (January 2015)

INTERNATIONAL SEARCH REPORT
Information on patent family members

International application No.

**PCT/JP2022/045677**

| Patent document cited in search report | | | Publication date (day/month/year) | Patent family member(s) | Publication date (day/month/year) |
|---|---|---|---|---|---|
| JP | 2003-193863 | A | 09 July 2003 | (Family: none) | |
| JP | 2004-85509 | A | 18 March 2004 | (Family: none) | |
| JP | 2006-4080 | A | 05 January 2006 | (Family: none) | |
| WO | 2017/221411 | A1 | 28 December 2017 | (Family: none) | |
| JP | 2018-206302 | A | 27 December 2018 | (Family: none) | |
| JP | 2003-111275 | A | 11 April 2003 | (Family: none) | |
| WO | 2017/094138 | A1 | 08 June 2017 | (Family: none) | |
| JP | 2019-148200 | A | 05 September 2019 | US 2021/0079857 A1 paragraphs [0003]-[0008] | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2018206302 A